# EUROPÄISCHE PATENTSCHRIFT

(11) **EP 1 325 474 B1**
(45) Veröffentlichungstag und Bekanntmachung des Hinweises auf die Patenterteilung: **19.01.2005**
(21) Anmeldenummer: 01971679.4
(22) Anmeldetag: 29.08.2001
(51) Int. Cl.: G06T 17/40

(54) **VERFAHREN, VORRICHTUNG UND SOFTWARE ZUR TRENNUNG DER EINZELOBJEKTE EINER AUS 3D-DATENSÄTZEN MEDIZINISCHER UNTERSUCHUNGSVERFAHREN SEGMENTIERTEN ANATOMISCHEN STRUKTUR**
METHOD, DEVICE AND SOFTWARE FOR SEPARATING THE INDIVIDUAL OBJECTS OF AN ANATOMIC STRUCTURE, WHICH IS SEGMENTED OUT OF 3D DATA SETS OF MEDICAL EXAMINATION METHODS
PROCEDE, DISPOSITIF ET LOGICIEL POUR SEPARER LES OBJETS INDIVIDUELS D'UNE STRUCTURE ANATOMIQUE SEGMENTEE A PARTIR DE JEUX DE DONNEES EN 3D DE METHODES D'EXAMEN MEDICALES

(30) Priorität: 11.09.2000 DE 10044844
(43) Veröffentlichungstag der Anmeldung: 09.07.2003
(73) Patentinhaber: SIEMENS AKTIENGESELLSCHAFT, 80333 München (DE)
(72) Erfinder: SEISSLER, WOLFGANG, 91080 Uttenreuth (DE)
(86) Internationale Anmeldenummer: PCT/DE2001/003313
(87) Internationale Veröffentlichungsnummer: WO 2002/021452

(56) Entgegenhaltungen:
- EP-A- 0 549 182
- DE-A- 4 117 117
- YASUZO SUTO ET AL: "AN ALGORITHM FOR REMOVING SECTIONS OF BONE FROM X-RAY CT MODELS" SYSTEMS & COMPUTERS IN JAPAN, SCRIPTA TECHNICA JOURNALS. NEW YORK, US, Bd. 22, Nr. 3, 1991, Seiten 94-107, XP000234175 ISSN: 0882-1666

## Beschreibung

Die Erfindung betrifft ein Verfahren, eine Vorrichtung und ein Softwareprodukt zur medizinischen Bildverarbeitung von aus medizinischen Untersuchungsverfahren gewonnenen Datensätzen dreidimensionalen Charakters, wobei ausgehend von Daten in der Form von Volumenelementen eine Trennung der Daten relevanter anatomischer Strukturen sowie anderer Strukturen vorgenommen wird und eine räumliche Darstellung mindestens einer interessierenden Struktur erfolgt.

Bei der räumlichen Interpretation der Information aus Röntgenaufnahmen oder aus Schnittbildern, wie sie mit modernen tomographischen Methoden gewonnen werden, stößt das menschliche Vorstellungsvermögen sehr schnell an seine Grenzen. Moderne Methoden der medizinischen Bildverarbeitung wandeln daher die bei medizinischen Untersuchungen gewonnenen Informationen dreidimensionalen Charakters in räumliche Eindrücke des Körperinneren um. Im allgemeinen reicht es aber nicht aus dem Mediziner nur einen räumlichen Eindruck der dargestellten Körperregion zu vermitteln. Vielmehr benötigt er zum Erstellen einer zuverlässigen Diagnose oder für das Planen einer therapeutischen Maßnahme aber auch eines chirurgischen Eingriffs, eine Reduktion der dargestellten Daten auf das für ihn Wesentliche. In anderen Worten muss sich der Gegenstand seines Interesses deutlich von der Umgebung mit nur sekundärem Informationsgehalt abheben. Hierzu wurden eine Reihe von Verfahren entwickelt, die eine Zuordnung einzelner Messwerte zu relevanten anatomischen Strukturen, wie z.B. Nerven oder Fettgewebe, Knochen oder muskeläquivalentes Gewebe aber auch zu nicht anatomischen Strukturen wie z.B. Fremdkörper ermöglichen. Diese Verfahren werden als Segmentierung bezeichnet und bilden die Voraussetzung, dass ein Mediziner beispielsweise die Knochenstruktur eines Patienten isoliert von anderen Geweben am Bildschirm betrachten kann.

Für die Planung eines chirurgischen Eingriffes, z.B. nach einem Unfall mit der Folge eines komplizierten Knochenbruchs, ist diese Form der Präsentation der Untersuchungsergebnisse jedoch oft nicht ausreichend, da sie zwar den Istzustand der interessierenden Struktur festhält, eine Manipulation der Daten in Hinblick auf zu ergreifenden Maßnahmen jedoch nicht zulässt; denn die einzelnen Objekte innerhalb einer jeden Struktur bleiben bei den bisher bekannten Segmentierungsverfahren in ihrer geometrischen Anordnung zueinander fixiert. Die Vorbereitung eines Eingriffs zur Behandlung eines komplizierten Trümmerbruchs erfordert daher vom Orthopäden eine enorme mentale Leistung, da er die Zuordnung der diversen Bruchflächen und somit auch der Knochenfragmente zueinander nicht am Bildschirm verifizieren kann.

In "Fast Visualization, Manipulation, and Analysis of Binary Volumetric Objects", IEEE Computer Graphics and Applications, Nov. 1991, Seite 53-62 wird ein Verfahren zum Aufspalten einer anatomischen Struktur in zwei Komponenten entlang einer willkürlich festzulegenden Ebene vorgeschlagen. Die abgetrennten Komponenten können unabhängig von der ursprünglichen Struktur im Raum repositioniert werden.

B. Plesser, U. Thiede und K.H. Höhne schlagen in "Simulating Motion of Anatomical Objects with Volume-Based 3D-Visualization", R.A. Robb (ed): Visualization in Biomedical Computing, Proc. SPIE 2359, 1994, Seite 291-300, das Zerteilen eines anatomischen Objektes in Teilobjekte vor, die anschließend in eine neue räumliche Anordnung überführt werden können.

In "An Algorithm for Removing Sections of Bone from X-Ray CT Models", Systems and Computers in Japan, Scripta Technica Journals, New York, US, Bd. 22, Nr. 3, 1991, Seiten 94 bis 107, XP000234175 ISSN:0882-1666 von Yasuzo et al. wird ein Verfahren zur rechnergestützten Bearbeitung medizinischer 3D-Bilddatensätze offenbart. Das Verfahren bietet einem Benutzer die Möglichkeit mittels Eingabe von Polygonzügen dreidimensionale Körper innerhalb des 3D-Bilddatensatzes zu definieren. Der Bilddatensatz wird anschließend in eine Region innerhalb und eine Region außerhalb des definierten Körpers aufgeteilt. Beide Regionen können anschließend gegeneinander verschoben werden. Dabei werden die an den Begrenzungsflächen des definierten Körpers befindlichen Volumenelemente in einer graphischen Reproduktion des Bilddatensatzes als freigelegte innere Oberflächen sichtbar. Die Aufteilung des Datensatzes wird vom Benutzer in beliebiger Weise durch Definition eines entsprechenden Polyeders vorgenommen, so dass im Resultat eine Schnittoperation durch die im Bilddatensatz dargestellten Strukturen durchgeführt wird.

In der EP 0 549 182 A2 wird ein Verfahren vorgestellt, das einen als 'clip box' bezeichneten Volumenkörper verwendet um einen 3D-Bilddatensatz in zwei zueinander komplementäre Regionen aufzuteilen. Die Begrenzungsflächen der 'clip box' dienen hierbei als Trennflächen für die Regionen, so dass ähnlich dem Verfahren nach Yasuzo et al. innere Grenzflächen als Schnittflächen sichtbar gemacht werden. Je nachdem, ob der Modellteil des Datensatzes außerhalb oder innerhalb der 'clip box' dargestellt wird erhält man einen Blick in eine Öffnung des Modells oder aber einen Blick auf die freigelegten inneren Oberflächen am herausgeschnittenen Teil.

Aufgabe der vorliegenden Erfindung ist es, ein Verfahren und eine Vorrichtung zum Auftrennen einer anatomischen Struktur in ihre Einzelobjekte anzugeben, so dass diese unabhängig voneinander einzeln und/oder in Gruppen beliebig in der räumlichen Darstellung neu angeordnet werden können.

Diese Aufgabe wird gelöst durch ein Verfahren, eine Vorrichtung und ein Softwareprodukt zur bildgebenden Bearbeitung von aus medizinischen Untersuchungsverfahren gewonnenen Datensätzen dreidimensionalen Charakters, wobei ausgehend von Daten in der Form von Volumenelementen eine Trennung der Daten relevanter anatomischer Strukturen sowie anderer Strukturen vorgenommen wird und eine räumliche Darstellung mindestens einer interessierenden Struktur erfolgt, wobei von der interessierenden Struktur mindestens eines ihrer Einzelobjekte dergestalt abgetrennt wird, dass das Einzelobjekt in der räumlichen Darstellung neu positionierbar ist. Dabei erfolgt eine Segmentierung bzw. Trennung der Einzelobjekte voneinander, indem in einem ersten Schritt das die anatomischen Struktur umfassende Gesamtvolumen in Teilvolumina aufgeteilt wird, wobei ein Einzelobjekt in dem ihm zugeordneten Teilvolumen vollständig enthalten ist und in einem zweiten Schritt alle anderen diesem Einzelobjekt nicht zuzurechnenden Daten aus diesem Teilvolumen entfernt werden und schließlich in einem dritten Schritt die resultierenden Daten eines jeden so bearbeiteten Teilvolumens abgespeichert werden.

Vorteilhaft lassen sich damit zeitaufwendige Prozeduren von der Operation in die Planungsphase vorverlegen, wobei die genaue Planung eines Eingriffs im Vorfeld der Operation nicht nur die Dauer des Eingriffs reduziert und damit den Patienten weniger belastet, sondern dem Mediziner auch ein präziseres und sichereres Arbeiten während der Operation ermöglicht. Weiter vorteilhaft kann der Einsatz geeigneter Hilfsmittel, wie z.B. Schrauben, Nägel, etc. schon vor der Operation getestet werden. Ebenso vorteilhaft lassen sich auf Basis der vorliegenden Erfindung Implantate nun gemäß den ermittelbaren Gegebenheiten vorformen und müssen nicht mehr im Verlauf der Operation intuitiv gestaltet werden.

In einer vorteilhaften Ausbildung der Erfindung weisen die Teilvolumina die Form eines Quaders auf, wodurch sich die einzelnen Volumina leicht zusammensetzen lassen. Vorteilhaft werden mit den Daten eines jeden Teilvolumens auch die zugehörigen Koordinateninformationen abgespeichert. Von Vorteil ist insbesondere die Aufbereitung von 3D-Computer-Tomographie-Datensätzen, wobei die Wahl einer Knochenstruktur als interessierende Struktur mit den einzelnen Knochen und/oder Knochenfragmenten als zu segmentierende Einzelobjekte der Struktur besonders vorteilhaft ist.

Im Folgenden wird die Erfindung näher beschrieben, wobei auf folgende Figuren verwiesen wird:
- Figur 1: zeigt eine schematisierte 3D-Darstellung der knöchernen Struktur eines Handgelenks mit einer Fraktur und einer Dislozierung des Os Metacarpale V, wobei der dieser Darstellung zugrunde liegende 3D-CT-Datensatz die Ausgangsbasis für das beschriebene Beispiel des Verfahren bildet.
- Figur 2: zeigt ein verfahrensgemäß für das dislozierte Knochenfragment aus Figur 1 erzeugte Teilvolumen.
- Figur 3: zeigt das dislozierte Knochenfragment der vorhergehenden Abbildungen so zum zweiten Fragment des Os Metacarpale V ausgerichtet, dass sich die Bruchflächen parallel gegenüberliegen.
- Figur 4: zeigt die knöcherne Struktur aus der Figur 1 mit den virtuell an den Bruchflächen zusammengefügten Knochenfragmenten.
- Figur 5: ist ein Blockschaltbild einer erfindungsgemäßen Vorrichtung mit Angabe der von der Verarbeitungseinrichtung vorgenommenen Verfahrensschritte.

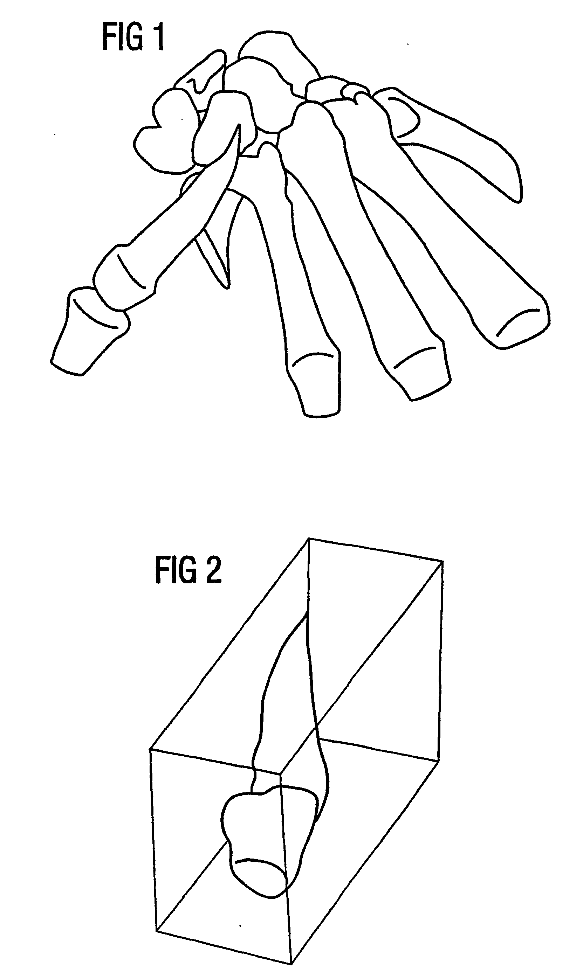

Figur 1 gibt mit zeichnerischen Mitteln eine Vorstellung der bildlichen Repräsentation eines computertomographischen 3D-Datensatzes, wie sie Chirurgen gegenwärtig zur Verfügung stehen. In der Praxis werden die Daten unter Verwendung eines Volume-Rendering genannten Verfahrens visualisiert, worin die Oberfläche der ermittelten knöchernen Struktur mit Hilfe einer passend berechneten Verteilung von Licht und Schatten so dargestellt wird, dass sie dem Betrachter bzw. dem Chirurgen eine plastische Vorstellung der zugrundeliegenden räumlichen Struktur vermittelt.

In der linken Hälfte der Figur ist deutlich eine Knochenfraktur mit einem dislozierten Fragment des Os Metacarpale V erkennbar. Die relative Lage dieses Knochenfragments zu den anderen Objekten der bildlich gemachten Struktur kann an dieser Ausgangsstufe (S0) des erfindungsgemäßen Verfahrens nicht verändert werden, da die Struktur in dieser von den Standardverfahren der medizinischen Bildverarbeitung gegebenen Stufe ein einziges zusammenhängendes Objekt bildet. Durch Wahl eines geeigneten Blickwinkels erhält ein Betrachter zwar die Möglichkeit, Details wie z.B. die Bruchflächen näher zu untersuchen, doch eine Prüfung beider Bruchflächen auf Formschlüssigkeit erfordert vom Betrachter ein nicht immer voraussetzbares Vorstellungsvermögen.

Eine Überprüfung, ob sich beide Bruchflächen nahtlos aneinanderfügen lassen, setzt voraus, dass sich beide Fragmente des gebrochenen Knochens unabhängig voneinander ausrichten und positionieren lassen. Nach Segmentierung des Datensatzes in anatomische Strukturen erhält man jedoch die dargestellte Knochenstruktur als zusammenhängendes Objekt. Die vom Betrachter unbewusst vollzogene Untergliederung in die Einzelobjekte der Struktur, im vorliegenden Beispiel in Knochen und Knochenfragmente, wird von den bisher üblichen Segmentierungsverfahren nicht nachvollzogen.

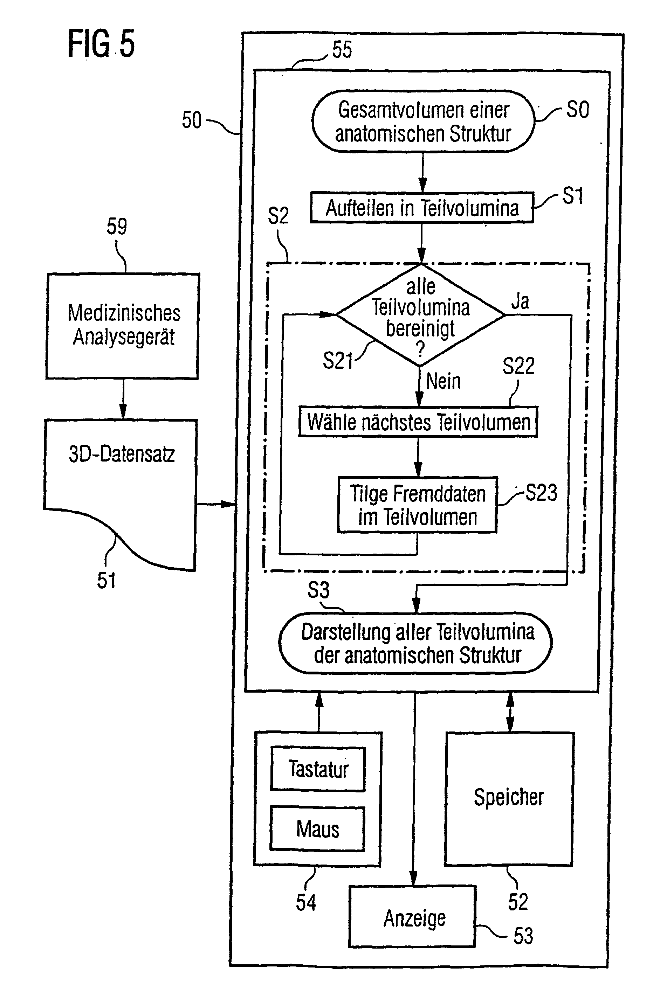

Um eine weitere Segmentierung der Strukturen innerhalb einer anatomischen Struktur zu erreichen, wird gemäß dem Verfahrensschritt S1 in der Figur 5, der vorliegende 3D-CT-Datensatz zunächst in getrennte Volumina zerlegt, wobei jedes dieser Volumina eine komplette Teilstruktur bzw. ein Einzelobjekt vollständig enthält. Im oben angegebenen Beispiel umschließt ein solches Teilvolumen also einen einzelnen Knochen oder ein einzelnes Knochenfragment. Vorteilhaft wird dazu jedes im 3D-CT-Datensatz identifizierte Einzelobjekt entsprechend seiner räumlichen Ausdehnung durch einen Quader umschrieben.

Viele Einzelobjekte befinden sich zueinander in unmittelbarer Nachbarschaft, weshalb im allgemeinen in den einzelnen Teilvolumina neben dem erwünschten Einzelobjekt auch Bestandteile benachbarter Objekte enthalten sind. Im nächsten Schritt (S2) werden daher die Teilvolumina bereinigt, indem die Daten der Nachbarobjekte in jedem der Teilvolumina getilgt werden, bis schließlich das beschriebene Teilvolumen ausschließlich das ihm zugeordnete Einzelobjekt, im Beispiel der Figur 2 das dislozierte Knochenfragment, enthält. Vorteilhaft werden die auf diese Weise erstellten Datenteilvolumina mit der ihnen zugeordneten Koordinateninformation abgespeichert.

Diese fortgeschrittene Segmentierung wird für alle Knochen bzw. Knochenfragmente des 3D-CT-Datensatzes vorgenommen (S21, S22, S23), so dass sich der ursprüngliche Datensatz aus der Summe der erzeugten Datenteilvolumina darstellen lässt. Die visuelle Darstellung dieser Summe (S3) ist zunächst dieselbe wie vor Beginn der Segmentierung der anatomischen Struktur in ihre isolierbaren Objekte.

Jedoch ist an dieser Stelle des Verfahrens der fixe geometrische Bezug der Einzelobjekte relativ zueinander aufgehoben.

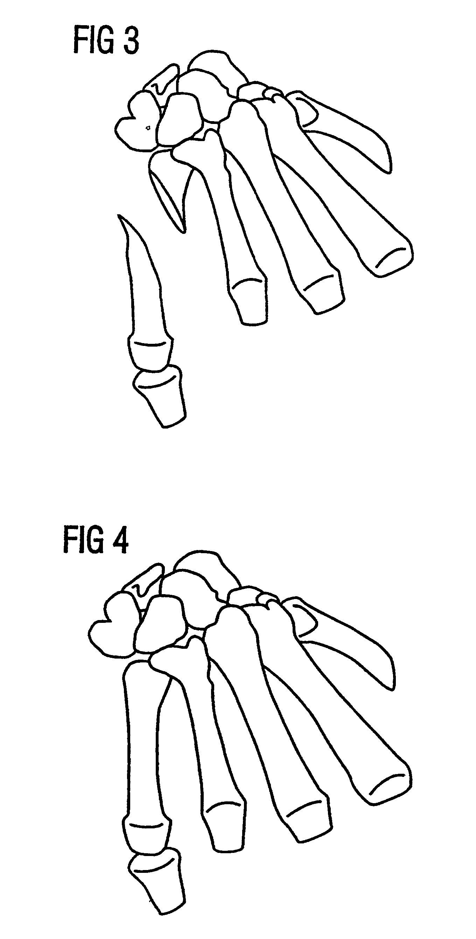

Die Einzelobjekte können jetzt, wie im Ergebnis z.B. in der Figur 3 zu sehen, einzeln angewählt und neu ausgerichtet werden. Das dislozierte Knochenfragment ist in dieser Darstellung so ausgerichtet, dass sich die beiden Bruchflächen parallel gegenüberstehen. Gegenüber dieser Darstellung wurde in der Figur 4 das Knochenfragment weiter verschoben, so dass beide Bruchflächen der Fraktur zur Deckung gebracht wurden. Diese virtuelle Reposition von Knochenfragmenten ist erst durch die erfindungsgemäße Segmentierung des ursprünglichen 3D-CT-Datensatzes möglich.

In der Figur 5 ist die Implementierung des beschriebenen Verfahrens in einer Vorrichtung zur medizinischen Bildbearbeitung (50) skizziert. Der, bei einer Untersuchung vom medizinischen Analysegerät gelieferte 3D-Datensatz wird an die erfindungsgemäße Vorrichtung (50) übertragen. Die Übertragung kann beliebig z.B. mit Hilfe eines Datenträgers oder über einen Datenbus bzw. ein Netzwerk erfolgen. Die Weiterbearbeitung des Datensatzes erfolgt durch die Verarbeitungseinrichtung (55) gemäß den Verfahrensschritten S0 bis S3. Ausgehend von der bereits segmentierten interessierenden anatomischen Struktur (S0) wird im ersten Verfahrensschritt (S1) das, diese Struktur umfassende Volumen-in eine Vielzahl von Teilvolumina aufgeteilt, wobei jedes Teilvolumen ein Einzelobjekt der interessierenden Struktur vollständig umhüllt. Die Bereinigung (S2) erfolgt für alle Teilvolumina (S21, S22) indem alle, nicht zum Einzelobjekt eines Teilvolumens gehörigen Daten aus diesem getilgt (S23) werden. Schließlich werden alle Teilvolumina und damit alle Einzelobjekte der interessierenden anatomischen Struktur auf dem Anzeigegerät (53) zur Darstellung gebracht (S3). Die Darstellung kann über Befehle oder Steuersignale, die über eine Eingabeeinrichtung an die Verarbeitungseinrichtung gegeben werden, vom Bediener beeinflusst werden. Die Speichereinrichtung (52) nimmt die ursprünglichen Datensätze und die Daten die im Verlauf und Ergebnis des beschriebenen Bildverarbeitungsprozesses anfallen auf.

## Patentansprüche

1. Verfahren zur bildgebenden Bearbeitung von aus medizinischen Untersuchungsverfahren gewonnenen Datensätzen dreidimensionalen Charakters, wobei
- ausgehend von Daten in der Form von Volumenelementen eine Trennung der Daten relevanter anatomischer Strukturen sowie anderer Strukturen vorgenommen wird und
- eine räumliche Darstellung mindestens einer interessierenden Struktur erfolgt,
**dadurch gekennzeichnet,**
**dass** von der interessierenden Struktur mindestens eines der sie bildenden Einzelobjekte abgetrennt wird indem
- dem Einzelobjekt ein es vollständig umschließendes Teilvolumen zugeordnet wird,
- innerhalb des Teilvolumens alle Daten, die nicht dem Einzelobjekt zuzuordnen sind entfernt werden und
- die Daten des so erzeugten Teilvolumens abgespeichert werden,
so dass das Einzelobjekt in der räumlichen Darstellung neu positionierbar ist.

2. Verfahren zur bildgebenden Bearbeitung von aus medizinischen Untersuchungsverfahren gewonnenen Datensätzen dreidimensionalen Charakters nach Anspruch 1,
**dadurch gekennzeichnet,**
**dass** das Teilvolumen die Form eines Quaders aufweist.

3. Verfahren zur bildgebenden Bearbeitung von aus medizinischen Untersuchungsverfahren gewonnenen Datensätzen dreidimensionalen Charakters nach Anspruch 1 oder 2,
**dadurch gekennzeichnet,**
**dass** die Daten des Teilvolumens zusammen mit der zugehörigen Koordinateninformation abgespeichert werden.

4. Verfahren zur bildgebenden Bearbeitung von aus medizinischen Untersuchungsverfahren gewonnenen Datensätzen dreidimensionalen Charakters nach einem der Ansprüche 1, 2 oder 3,
**dadurch gekennzeichnet,**
**dass** die aus medizinischen Untersuchungsverfahren gewonnenen Datensätze 3D-Computer-Tomographiedatensätze sind.

5. Verfahren zur bildgebenden Bearbeitung von aus medizinischen Untersuchungsverfahren gewonnenen Datensätzen dreidimensionalen Charakters nach einem der Ansprüche 1 bis 4,
**dadurch gekennzeichnet,**
**dass** die interessierende Struktur eine knöcherne Struktur ist und die Einzelobjekte der Struktur Knochen und/oder Knochenfragmente sind.

6. Vorrichtung (50) zur bildgebenden Bearbeitung von aus medizinischen Untersuchungsverfahren gewonnenen Datensätzen (51) dreidimensionalen Charakters mit
- einer Speichereinrichtung (52) zum Speichern zumindest eines Datensatzes, der einer räumlichen Darstellung relevanter anatomischer Strukturen und/oder Teilstrukturen zugrunde liegt,
- einer graphischen Anzeigeeinrichtung (53) zur visuellen Präsentation zumindest einer, dem Datensatz zugrundeliegenden interessierenden Struktur,
- einer Eingabeeinrichtung (54) zum Eingeben von Befehlen, und
- einer Verarbeitungseinrichtung (55) zum Verarbeiten der eingegebenen Befehle, zur Steuerung der räumlichen Darstellung graphische Objekte repräsentierender Datensätze und zur Aufbereitung dieser Datensätze
**dadurch gekennzeichnet,**
**dass** die Verarbeitungseinrichtung von der interessierenden Struktur mindestens eines deren Einzelobjekte abtrennt indem
- sie zuerst dem Einzelobjekt ein Teilvolumen so zuordnet, dass das Einzelobjekt darin vollständig enthalten ist,
- daraufhin alle Daten in dem Teilvolumen, die nicht dem zugeordneten Einzelobjekt zuzurechnen sind, entfernt und
- zuletzt die Daten des so erzeugten Teilvolumens in der Speichereinrichtung abspeichert,
so dass das Einzelobjekt in der räumlichen Darstellung neu positionierbar ist.

7. Vorrichtung zur bildgebenden Bearbeitung von aus medizinischen Untersuchungsverfahren gewonnenen Datensätzen dreidimensionalen Charakters nach Anspruch 6,
**dadurch gekennzeichnet,**
**dass** die Verarbeitungseinrichtung als Form des Teilvolumens einen Quader verwendet.

8. Vorrichtung zur bildgebenden Bearbeitung von aus medizinischen Untersuchungsverfahren gewonnenen Datensätzen dreidimensionalen Charakters nach Anspruch 6 oder 7,
**dadurch gekennzeichnet,**
**dass** die Verarbeitungseinrichtung die Daten des Teilvolumens zusammen mit der zugehörigen Koordinateninformation in der Speichereinrichtung abspeichert.

9. Vorrichtung zur bildgebenden Bearbeitung von aus medizinischen Untersuchungsverfahren gewonnenen Datensätzen dreidimensionalen Charakters nach einem der Ansprüche 6, 7 oder 8,
**dadurch gekennzeichnet,**
**dass** die aus medizinischen Untersuchungsverfahren gewonnenen Datensätze 3D-Computer-Tomographiedatensätze sind.

10. Vorrichtung zur bildgebenden Bearbeitung von aus medizinischen Untersuchungsverfahren gewonnenen Datensätzen dreidimensionalen Charakters nach einem der Ansprüche 6 bis 9,
**dadurch gekennzeichnet,**
**dass** die interessierende Struktur eine knöcherne Struktur ist und die Einzelobjekte der Struktur Knochen und/oder Knochenfragmente sind.

11. Computersoftwareprodukt zur bildgebenden Bearbeitung von aus medizinischen Untersuchungsverfahren gewonnenen Datensätzen dreidimensionalen Charakters, das bei Ausführung auf einem Rechner
ausgehend von Daten in der Form von Volumenelementen eine Trennung der Daten in relevante anatomischer Strukturen sowie anderer Strukturen vornimmt und mindestens eine interessierende Struktur räumlich darstellt,
**dadurch gekennzeichnet,**
**dass** es von der interessierenden Struktur eine Abtrennung mindestens eines deren Einzelobjekte durchführt indem
- es in einem ersten Schritt dem Einzelobjekt ein Teilvolumen so zuordnet, dass das Einzelobjekt darin vollständig enthalten ist,
- in einem zweiten Schritt innerhalb des Teilvolumens alle Daten, die nicht dem Einzelobjekt zuzurechnen sind, entfernt und
- die Daten des so erzeugten Teilvolumens in einem dritten Schritt abspeichert,
so dass das Einzelobjekt in der räumlichen Darstellung neu positionierbar ist.

12. Computersoftwareprodukt zur bildgebenden Bearbeitung von aus medizinischen Untersuchungsverfahren gewonnenen Datensätzen dreidimensionalen Charakters nach Anspruch 11,
**dadurch gekennzeichnet,**
**dass** es als Form des Teilvolumens einen Quader verwendet.

13. Computersoftwareprodukt zur bildgebenden Bearbeitung von aus medizinischen Untersuchungsverfahren gewonnenen Datensätzen dreidimensionalen Charakters nach Anspruch 11 oder 12,
**dadurch gekennzeichnet,**
**dass** es die Daten des Teilvolumens zusammen mit der zugehörigen Koordinateninformation abspeichert.

14. Computersoftwareprodukt zur bildgebenden Bearbeitung von aus medizinischen Untersuchungsverfahren gewonnenen Datensätzen dreidimensionalen Charakters nach einem der Ansprüche 11 bis 13,
**dadurch gekennzeichnet,**
**dass** die aus medizinischen Untersuchungsverfahren gewonnenen Datensätze 3D-Computer-Tomographiedatensätze sind.

15. Computersoftwareprodukt zur bildgebenden Bearbeitung von aus medizinischen Untersuchungsverfahren gewonnenen Datensätzen dreidimensionalen Charakters nach einem der Ansprüche 11 bis 14,
**dadurch gekennzeichnet,**
**dass** die interessierende Struktur eine knöcherne Struktur ist und die Einzelobjekte der Struktur Knochen und/oder Knochenfragmente sind.

## Claims

1. Method for imaging processing of datasets with a three-dimensional character that are obtained from medical examination procedures, whereby
- a separation of the data of relevant anatomical structure as well as other structures is undertaken proceeding from data in the form of volume elements and
- a spatial presentation of at least one structure of interest is undertaken,
**characterized in that,**
at least one of the individual subjects of the structure of interest is separated and every individual subject has a partial volume allocated to it such that
- the individual subject completely contained therein; and,
- all data within this partial volume that are not to be counted as belonging to this individual subject are removed; and
- the data of each and every partial volume generated in this way are stored,
such that the individual subject can be re-positioned in the spatial presentation.

2. Method for imaging processing of datasets with a three-dimensional character obtained from medical examination procedures according to Claim 1
**characterized in that,**
the partial volume comprises the shape of a cuboid.

3. Method for imaging processing of datasets with a three-dimensional character obtained from medical examination procedures according to Claim 1 or 2,
**characterized in that,**
the data of the partial volume are stored together with the appertaining coordinate information.

4. Method for imaging processing of datasets with a three-dimensional character obtained from medical examination procedures according to one of the claims 1, 2 or 3,
**characterized in that,**
the datasets acquired from medical examination procedures are 3D computer tomography datasets.

5. Method for imaging processing of datasets with a three-dimensional character obtained from medical examination procedures according to one of the claims 1 through 4,
**characterized in that,**
the structure of interest is an osseous structure and the individual subjects of the structure are bones and/or bone fragments.

6. Apparatus (50) for imaging processing of datasets (51) with a three-dimensional character obtained from medical examination procedures, comprising
- a memory device (52) for storing at least one dataset that is based on a spatial presentation of relevant anatomical structures and/or partial structures, and,
- a graphic display device (53) for the visual presentation of at least one structure of interest on which the dataset is based, and,
- an input device (54) for inputting commands, and
- a processing device (55) for processing the input commands, for the control of the spatial presentation of datasets representing graphic subjects and for editing these datasets,
**characterized in that,**
the processing device separates at least one of the individual subjects of the structure of interest from the structure of interest and
- allocates a partial volume to each and every individual subject such that the individual subject is completely contained therein,
- removes all data within this partial volume that cannot be counted as belonging to this individual subject, and
- saves the data of each partial volume so generated,
such that the individual subject can be re-positioned in the spatial presentation.

7. Apparatus for imaging processing of datasets with a three-dimensional character that are obtained from medical examination procedures according to Claim 6
**characterized in that,**
the processing devices utilizes a cuboid as a shape of the partial volume.

8. Apparatus for imaging processing of datasets with a three-dimensional character that are obtained from medical examination procedures according to Claim 6 or 7,
**characterized in that,**
that it saves the data of the partial volume together with the coordinate information pertaining thereto.

9. Apparatus for imaging processing of datasets with a three-dimensional character that are obtained from medical examination procedures according to one of the claims 6, 7 or 8,
**characterized in that**
the datasets acquired from medical examination procedures are 3D computer tomography datasets.

10. Apparatus for imaging processing of datasets with a three-dimensional character that are obtained from medical examination procedures according to one of the claims 6 through 9,
**characterized in that**
the structure of interest is an osseous structure and the individual subjects of the structure are bones and/or bone fragments.

11. Computer software product for imaging processing of datasets with a three-dimensional character acquired from medical examination procedures that, when executed on a computer, undertakes a separation of the data into relevant anatomical structures as well as other structures proceeding from data in the form of volume elements and spatially presents at least one structure of interest,
**characterized in that,**
it implements a separation of at least one of the individual subjects of the structure of interest from the structure of interest
- in a first step, it allocates a partial volume to each individual subject ,
- in a second step, removes all data within this partial volume that cannot be counted as belonging to this individual subject
- in a third step, saves the data of each partial volume so generated
such that the individual subject can be re-positioned in the spatial presentation.

12. Computer software product for imaging processing of datasets with a three-dimensional character that are obtained from medical examination procedures according to Claim 11
**characterized in that,**
it utilizes a cuboid as a shape of the partial volume.

13. Computer software product for imaging processing of datasets with a three-dimensional character that are obtained from medical examination procedures according to one of the claims 11 through 12,
**characterized in that**
it saves the data of the partial volume together with the appertaining coordinate information.

14. Computer software product for imaging processing of datasets with a three-dimensional character that are obtained from medical examination procedures according to Claims 11 through 13,
**characterized in that,**
the datasets acquired from medical examination procedures are 3D computer tomography datasets.

15. Computer software product for imaging processing of datasets with a three-dimensional character that are obtained from medical examination procedures according to Claims 11 through 14,
**characterized in that,**
the structure of interest is an osseous structure and the individual subjects of the structure are bones and/or bone fragments.

## Revendications

1. Procédé de traitement par imagerie de jeux de données à caractère tridimensionnel obtenus par des méthodes d'analyse médicale, suivant lequel
- en partant de données sous la forme d'éléments de volume, on entreprend une séparation des données de structures anatomiques pertinentes ainsi que d'autres structures, et
- on effectue une représentation spatiale d'au moins une structure intéressante,
**caractérisé en ce qu'**on sépare de la structure intéressante au moins un des objets individuels qui la constituent, par le fait que
- on associe à l'objet individuel un volume partiel qui l'entoure en totalité,
- on élimine à l'intérieur du volume partiel toutes les données qui ne doivent pas être associées à l'objet individuel, et
- on mémorise les données du volume partiel ainsi produit,
de sorte que l'objet individuel peut être repositionné dans la représentation spatiale.

2. Procédé de traitement par imagerie de jeux de données à caractère tridimensionnel obtenus par des méthodes d'analyse médicale suivant la revendication 1, **caractérisé en ce que** le volume partiel a la forme d'un parallélépipède.

3. Procédé de traitement par imagerie de jeux de données à caractère tridimensionnel obtenus par des méthodes d'analyse médicale suivant la revendication 1 ou 2, **caractérisé en ce que** les données du volume partiel sont mémorisées conjointement avec les informations de coordonnées associées.

4. Procédé de traitement par imagerie de jeux de données à caractère tridimensionnel obtenus par des méthodes d'analyse médicale suivant l'une des revendications 1, 2 ou 3, **caractérisé en ce que** les jeux de données obtenus par des méthodes d'analyse médicale sont des jeux de données de tomographie par ordinateur en 3 dimensions.

5. Procédé de traitement par imagerie de jeux de données à caractère tridimensionnel obtenus par des méthodes d'analyse médicale suivant l'une des revendications 1 à 4, **caractérisé en ce que** la structure intéressante est une structure osseuse, et les objets individuels de la structure sont des os et/ou des fragments d'os.

6. Dispositif (50) de traitement par imagerie de jeux (51) de données à caractère tridimensionnel obtenus par des méthodes d'analyse médicale, comportant
- un équipement (52) de mémorisation pour mémoriser au moins un jeu de données qui est à la base d'une représentation spatiale de structures et/ou de structures partielles anatomiques pertinentes,
- un équipement (53) d'affichage graphique pour représenter visuellement au moins une structure intéressante basée sur le jeu de données,
- un équipement (54) d'entrée pour entrer des instructions, et
- un équipement (55) de traitement pour traiter les instructions entrées, pour commander la représentation spatiale de jeux de données représentant des objets graphiques, et pour éditer ces jeux de données,
**caractérisé en ce que** l'équipement de traitement sépare de la structure intéressante au moins un des objets individuels de celle-ci, par le fait que
- il associe tout d'abord à l'objet individuel un volume partiel de telle sorte que l'objet individuel y est contenu en totalité,
- ensuite, toutes les données dans le volume partiel, qui ne sont pas imputables à l'objet individuel associé sont éliminées, et
- enfin, les données du volume partiel ainsi produit sont mémorisées dans l'équipement de mémorisation,
de sorte que l'objet individuel peut être repositionné dans la représentation spatiale.

7. Dispositif de traitement par imagerie de jeux de données à caractère tridimensionnel obtenus par des méthodes d'analyse médicale suivant la revendication 6, **caractérisé en ce que** l'équipement de traitement utilise comme forme du volume partiel un parallélépipède.

8. Dispositif de traitement par imagerie de jeux de données à caractère tridimensionnel obtenus par des méthodes d'analyse médicale suivant la revendication 6 ou 7, **caractérisé en ce que** l'équipement de traitement mémorise dans l'équipement de mémorisation les données du volume partiel conjointement avec les informations de coordonnées associées.

9. Dispositif de traitement par imagerie de jeux de données à caractère tridimensionnel obtenus par des méthodes d'analyse médicale suivant l'une des revendications 6, 7 ou 8, **caractérisé en ce que** les jeux de données obtenus par des méthodes d'analyse médicale sont des jeux de données de tomographie par ordinateur en 3 dimensions.

10. Dispositif de traitement par imagerie de jeux de données à caractère tridimensionnel obtenus par des méthodes d'analyse médicale suivant l'une des revendications 6 à 9, **caractérisé en ce que** la structure intéressante est une structure osseuse, et les objets individuels de la structure sont des os et/ou des fragments d'os.

11. Produit logiciel informatique de traitement par imagerie de jeux de données à caractère tridimensionnel obtenus par des méthodes d'analyse médicale, qui lors de son exécution sur un ordinateur, en partant de données sous la forme d'éléments de volume, entreprend une séparation des données en structures anatomiques pertinentes et en autres structures, et représente spatialement au moins une structure intéressante,
**caractérisé en ce qu'**il sépare de la structure intéressante au moins un des objets individuels de celle-ci, par le fait que
- dans une première étape, il associe à l'objet individuel un volume partiel de telle sorte que l'objet individuel y est contenu en totalité,
- dans une deuxième étape, toutes les données à l'intérieur du volume partiel qui ne sont pas imputables à l'objet individuel sont éliminées, et
- dans une troisième étape, les données du volume partiel ainsi produit sont mémorisées,
de sorte que l'objet individuel peut être repositionné dans la représentation spatiale.

12. Produit logiciel informatique de traitement par imagerie de jeux de données à caractère tridimensionnel obtenus par des méthodes d'analyse médicale suivant la revendication 11, **caractérisé en ce qu'**il utilise comme forme du volume partiel un parallélépipède.

13. Produit logiciel informatique de traitement par imagerie de jeux de données à caractère tridimensionnel obtenus par des méthodes d'analyse médicale suivant la revendication 11 ou 12, **caractérisé en ce qu'**il mémorise les données du volume partiel conjointement avec les informations de coordonnées associées.

14. Produit logiciel informatique de traitement par imagerie de jeux de données à caractère tridimensionnel obtenus par des méthodes d'analyse médicale suivant l'une des revendications 11 à 13, **caractérisé en ce que** les jeux de données obtenus par des méthodes d'analyse médicale sont des jeux de données de tomographie par ordinateur en 3 dimensions.

15. Produit logiciel informatique de traitement par imagerie de jeux de données à caractère tridimensionnel obtenus par des méthodes d'analyse médicale suivant l'une des revendications 11 à 14, **caractérisé en ce que** la structure intéressante est une structure osseuse, et les objets individuels de la structure sont des os et/ou des fragments d'os.
